# EUROPÄISCHE PATENTSCHRIFT

(11) **EP 1 817 198 B1**
(45) Veröffentlichungstag und Bekanntmachung des Hinweises auf die Patenterteilung: **02.06.2010**
(21) Anmeldenummer: 05807627.4
(22) Anmeldetag: 09.11.2005
(51) Int. Cl.: B60N 2/30, B60N 2/36, B60N 2/06, B60N 2/10, B60N 2/12, B60N 2/20, B60N 2/22

(54) **FAHRZEUGSITZ, INSBESONDERE KRAFTFAHRZEUGSITZ**
VEHICLE SEAT IN PARTICULAR MOTOR VEHICLE SEAT
SIEGE DE VEHICULE, NOTAMMENT SIEGE DE VEHICULE AUTOMOBILE

(30) Priorität: 21.11.2004 DE 102004057471
(43) Veröffentlichungstag der Anmeldung: 15.08.2007
(73) Patentinhaber: Bayerische Motoren Werke Aktiengesellschaft, 80809 München (DE); KEIPER GmbH & Co. KG, 67657 Kaiserslautern (DE)
(72) Erfinder: SCHWINGENSCHLÖGEL, Stefan, 81543 München (DE); PETRY, Markus, 67259 Großniedesheim (DE)
(74) Vertreter: Patentanwälte Hosenthien-Held und Dr. Held
(86) Internationale Anmeldenummer: PCT/EP2005/011959
(87) Internationale Veröffentlichungsnummer: WO 2006/053657

(56) Entgegenhaltungen:
- WO-A-99/08894
- WO-A-2004/078515
- DE-A1-102004 008 177
- US-A- 6 123 380
- US-A1- 2002 171 282
- PATENT ABSTRACTS OF JAPAN Bd. 2003, Nr. 08, 6. August 2003 (2003-08-06) & JP 2003 118456 A (MAZDA MOTOR CORP), 23. April 2003 (2003-04-23)

## Beschreibung

Die Erfindung betrifft einen Fahrzeugsitz, insbesondere einen Kraftfahrzeugsitz, mit den Merkmalen des Oberbegriffs des Anspruches 1.

Unter einer Bodenstellung ist eine solche Stellung des Fahrzeugsitzes zu verstehen, bei der zumindest die Lehne wenigstens näherungsweise nach vorne in die Horizontale geklappt und auch das Sitzkissen abgesenk ist, um Stauraum für die Lehne zu schaffen.

Ein Fahrzeugsitz der eingangs genannten Art ist aus der WO 99/08894 A1 bekannt. Der Fahrzeugsitz weist als Sitzkissenstruktur einen starren Rahmen auf, in welchen eine Federmatte eingespannt ist. Das Polster des Sitzkissens liegt teilweise auf dem Rahmen und teilweise auf der Federmatte auf. Die Sitzkissenstruktur des Sitzkissens ist beidseitig mittels eines Viergelenks am Mittelbau angelenkt. Bei der Überführung in die Bodenstellung klappt das Viergelenk zusammen, so dass das Sitzkissen sich an den Mittelbau anlegt. Auf jeder Fahrzeugsitzseite ist das Viergelenk möglichst weit außen angeordnet, um in der Mitte möglichst viel Raum für das Polster zur Verfügung zu haben. Eine vergleichbare Lagerung des Polsters weist auch ein Fahrzeugsitz auf, welcher aus der DE 10 2004 008 177 A1 bekannt ist.

Die US 2002/0171282 A1 zeigt einen Fahrzeugsitz, bei dem die Lehne beidseitig mit einer hinteren Schwinge verriegelbar ist und zusammen mit der Sitzkissenstruktur, einer vorderen Schwinge und dem Mittelbau beidseitig ein Viergelenk definiert. Durch Vorschwenken dieses Viergelenks ist der Fahrzeugsitz in eine Einstiegsstellung überführbar.

Ein aus der WO 2004/078515 A1 bekannter Fahrzeugsitz weist ein Sitzkissen auf, welches mittels einer vorderen Schwinge und einem Drehschubgelenk gelenkig mit einem Mittelbau verbunden ist. Bei der Überführung des Fahrzeugsitzes von einer Gebrauchsstellung schwenkt die am Mittelbau angelenkte Lehne nach vorne auf das sich absenkende Sitzkissen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem das Polster teilweise auf einer Sitzkissenabstützung aufliegt, welche zur Überführung des Fahrzeugsitzes in die Bodenstellung relativ zur Sitzkissenstruktur beweglich ist, kann einerseits das Polster besser und stärker abgesenkt werden, so dass es in der Bodenstellung besser verstaut werden kann, womit die Bodenstellung flacher wird oder bei gleicher Bodenstellung eine größere Polsterhöhe zur Verbesserung des Sitzkomforts möglich ist. Andererseits wird das Sitzkissen, insbesondere das Polster, besser - und auf die Anwendung abstimmbar - abgestützt, und zwar vorzugsweise in der Mitte, wo das Gewicht des Insassens größtenteils aufgenommen wird. Das Polster liegt flächig auf der Sitzkissenstruktur und der Sitzkissenabstützung auf.

Die Sitzkissenabstützung ist gelenkig mit der Sitzkissenstruktur und mit dem Mittelbau verbunden, was einerseits die Beweglichkeit sicherstellt und andererseits eine direkte Krafteinleitung in den Mittelbau unter Überbrückung der Sitzkissenstruktur ermöglicht. Für einen Geometrieausgleich ist am hinteren Ende der Sitzkissenabstützung wenigstes ein Drehschubgelenk vorgesehen, welches konstruktiv einfach durch eine Schlitz-Zapfen-Führung oder eine andere Kulisssenführung verwirklicht werden kann.

In einer einfachen Konstruktion weist die Sitzkissenabstützung wenigstens einen Längsträger auf, welcher vorne an der Sitzkissenstruktur angelenkt ist, beispielsweise mittels einfacher Drehgelenke an einer Sitzkissen-Quertraverse, und hinten mittels der Drehschubgelenke mit dem Mittelbau verbunden ist. Die Drehschubgelenke können aber auch vorne zwischen Sitzkissenstruktur und Längsträger vorgesehen sein. Vorzugsweise sind wenigstens zwei Längsträger vorgesehen, welche mittels eines gemeinsamen Querträgers miteinander verbunden sind, um ein Grundgerüst der Sitzkissenabstützung zu bilden. Die Drehschubgelenke sind dann vorzugsweise dem Querträger zugeordnet, welcher beispielsweise zur Bildung der Drehschubgelenke an seinen beispielsweise zapfenartig ausgebildeten Enden in Führungen des Mittelbaus geführt ist. Es ist aber auch möglich, dass am Querträger Führungen angebracht sind, in welche Zapfen o.ä, des Mittelbaus greifen. Zur bevorzugten Aufnahme des Polsters ist zwischen den Längsträgern und/oder dem Querträger und einer Sitzkissen-Quertraverse der Sitzkissenstruktur eine Sitzschale und/oder eine Federmatte vorgesehen.

Eine besonders tiefe Bodenstellung ist erreichbar, wenn das Sitzkissen mittels eines Viergelenks am Mittelbau angelenkt ist, insbesondere indem die Sitzkissenstruktur und der Mittelbau zwei Getriebeglieder des Viergelenks bilden, welches beim Übergang des Fahrzeugsitzes in die Bodenstellung das Sitzkissen relativ zum Mittelbau absenkt, also durch eine bessere Raumausnutzung zusätzlich die Höhe des Fahrzeugsitz reduziert wird. Beispielsweise bilden ein Abschnitt der Lehne und eine Schwinge die beiden anderen Getriebeglieder des Viergelenks.

Obwohl die Überführung in die Bodenstellung für viele Anwendungen ausreicht, so ist es doch vorteilhaft, wenn der Fahrzeugsitz von der Gebrauchsstellung in eine Einstiegsstellung überführbar ist. Unter einer Einstiegsstellung soll eine solche Stellung des Fahrzeugsitzes verstanden werden, bei der zumindest die Lehne gegenüber der Vertikalen in Fahrtrichtung nach vorne (statt nach hinten) geneigt ist, vorzugs - weise dabei der gesamte Fahrzeugsitz nach vorne vorverlagert ist. Vorzugsweise ist hierfür der Mittelbau mittels eines weiteren Viergelenks an einem Unterbau angelenkt, wobei das weitere Viergelenk den Fahrzeugsitz als Ganzes freischwenkt, während die Lehne ihre Position relativ zum Mittelbau beibehält. In vereinfachter Ausführung des Fahrzeugsitzes ohne Einstiegsstellung kann der Mittelbau fest mit dem Unterbau verbunden sein, wobei die Fahrzeugstruktur selber als Unterbau fungieren kann.

Obwohl für die Überführung in die Bodenstellung der Fahrzeugsitz nicht längseinstellbar zu sein braucht, ist es vorteilhaft, wenn der Fahrzeugsitz in eine andere Sitzlängsposition überführbar ist, um zur Komfortsteigerung die Sitzlängsposition individuell einstellen zu können und um beispielsweise bei der Überführung in die Einstiegsstellung eine weitere Vorverlagerung des Fahrzeugsitzes zu erreichen. Der Mittelbau besteht dann beispielsweise aus zwei Sitzschienenpaaren, weist solche auf oder ist an solchen angelenkt oder fest angebracht.

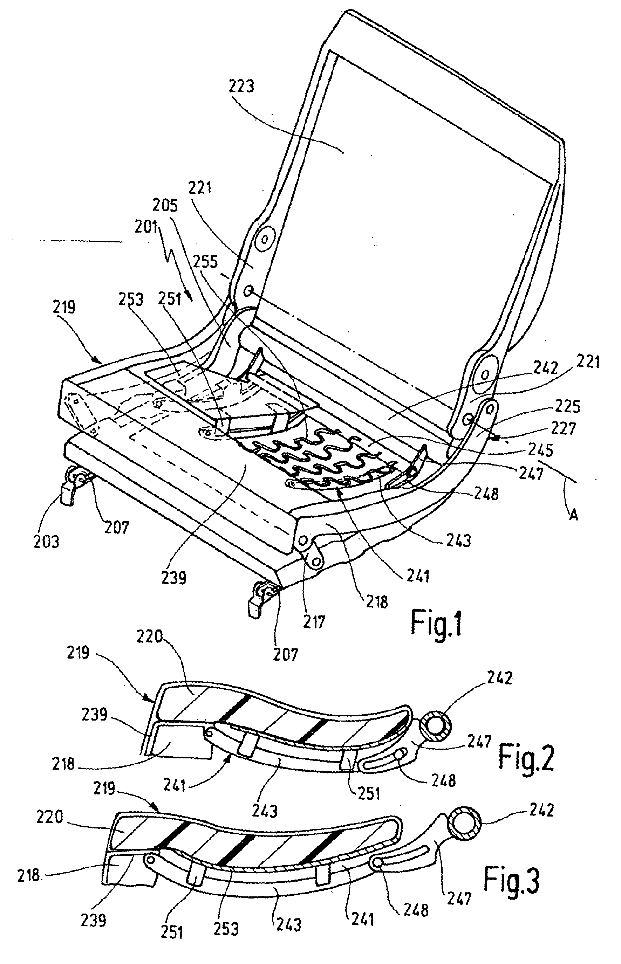

Im folgenden ist die Erfindung anhand eines in der Zeichnung dargestellten Ausführungsbeispiels näher erläutert. Es zeigen
- Fig. 1: eine perspektivische Teilansicht des Ausführungsbeispiels ohne Polster in der Gebrauchsstellung,
- Fig. 2: einen Teillängsschnitt durch das Ausführungsbeispiel in der Gebrauchsstellung,
- Fig. 3: eine Fig. 2 entsprechende Ansicht in der Bodenstellung,

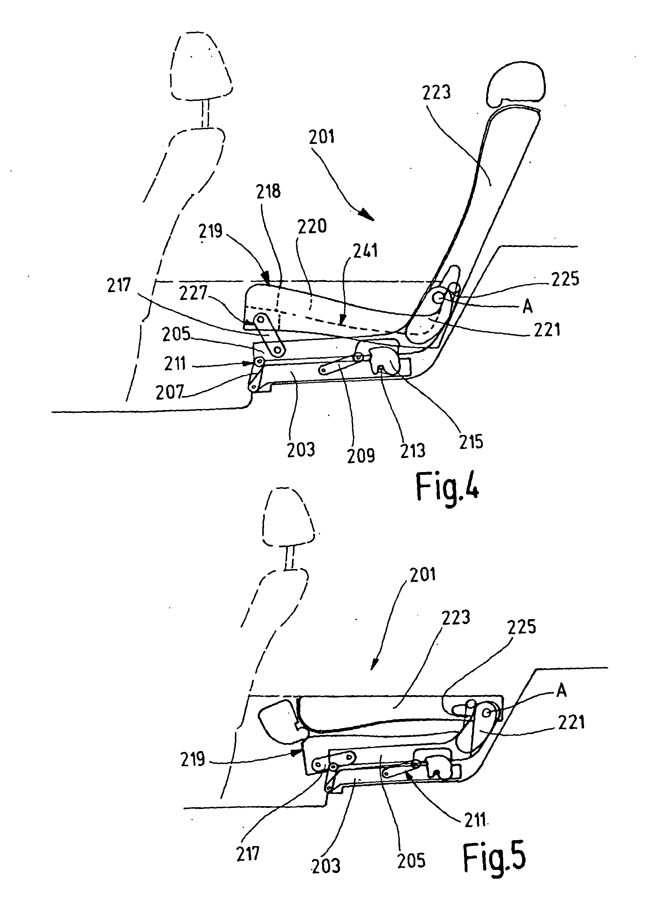

- Fig. 4: eine schematische Seitenansicht des Ausführungsbeispiels in der Gebrauchsstellung,
- Fig. 5: eine Fig. 4 entsprechende Ansicht in der Bodenstellung, und

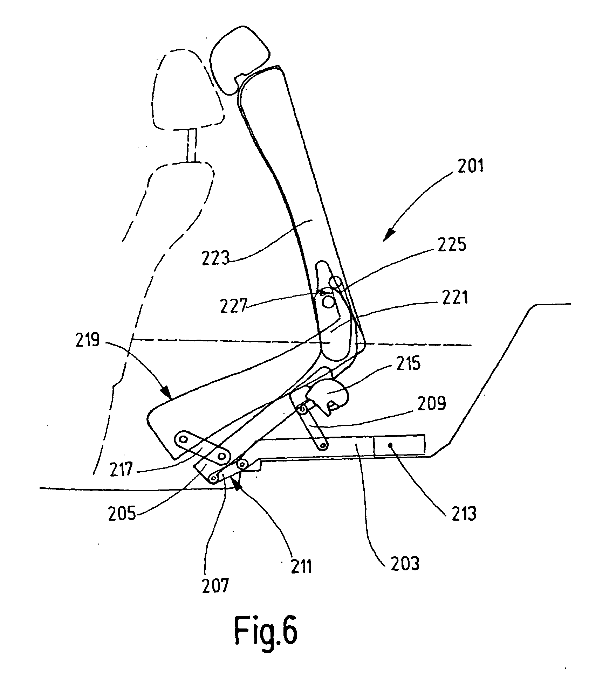

- Fig. 6: eine Fig. 4 entsprechende Ansicht in der Einstiegsstellung.

Ein Fahrzeugsitz 201 ist für eine hintere Sitzreihe eines Kraftfahrzeuges vorgesehen, insbesondere für die zweite Sitzreihe eines Vans. Die Anordnung des Fahrzeugsitzes 201 innerhalb des Kraftfahrzeuges und dessen gewöhnliche Fahrtrichtung bestimmen die nachfolgend verwendeten Richtungsangaben. Der Fahrzeugsitz 201 weist einen Unterbau 203, der mit der Fahrzeugstruktur verbunden wird oder in abgewandelter Ausführung einen Bestandteil derselben bildet, und einen Mittelbau 205 auf, der auf jeder Fahrzeugsitzseite mittels einer ersten Schwinge 207 vorne und mittels einer zweiten Schwinge 209 ungefähr in der Mitte des Unterbaus 203 an diesem angelenkt ist, so dass auf jeder Fahrzeugsitzseite der Unterbau 203, die beiden Schwingen 207 und 209 und der Mittelbau 205 als Getriebeglieder ein erstes Viergelenk 211 definieren. Am Unterbau 203 ist am hinteren Ende auf jeder Fahrzeugsitzseite ein Bolzen 213 angebracht. Ein am Mittelbau 205 am hinteren Ende auf jeder Fahrzeugsitzseite angebrachtes Schloß 215 verriegelt in einer zum Einsitzen für einen Benutzer geeigneten Gebrauchsstellung des Fahrzeugsitzes 201 mit dem Bolzen 213, wodurch das erste Viergelenk 211 verriegelt ist.

Am vorderen Ende des Mittelbaus 205 ist mittels einer dritten Schwinge 217 auf jeder Fahrzeugsitzseite eine vordere Ecke der Sitzkissenstruktur 218 eines Sitzkissens 219 angelenkt. Unter dem Begriff "Sitzkissen" soll die ganze Baugruppe mit Sitzkissenstruktur 218 und Polster 220 zu verstehen sein. Am hinteren Ende des Mittelbaus 205 ist auf jeder Fahrzeugsitzseite ein neigungseinstellbarer Beschlag 221 angebracht, der jeweils eine Seite einer Lehne 223 trägt und die Lehnenschwenkachse A definiert. Damit ist die Lehne 223 relativ zum Mittelbau schwenkbar und verriegelbar, um zur Komfortsteigerung die Lehnenneigung individuell einstellen zu können. Am hinteren Ende des Sitzkissens 219 ist auf jeder Fahrzeugsitzseite ein sitzkissenstrukturfester Arm 225 vorgesehen, welcher an der Lehne 223 angelenkt ist. Vorliegend ist der Arm 225 einstückig mit der Sitzkissenstruktur 218 ausgebildet. Die dritte Schwinge 217, die Sitzkissenstruktur 218 samt Arm 225, der Lehnenabschnitt zwischen der Anlenkstelle des Armes 225 und der Lehnenschwenkachse und der Mittelbau 205 definieren als Getriebeglieder ein zweites Viergelenk 227. Der ganze Fahrzeugsitz 201 ist in seinem bisher beschriebenen Aufbau im wesentlichen symmetrisch zu einer vertikalen Mittelebene, wobei die verschiedenen Anlenkstellen auf den beiden Fahrzeugsitzseiten miteinander fluchtende Achsen aufweisen.

Zwischen zwei auf jeder Fahrzeugsitzseite vorgesehenen Seitenteilen der Sitzkissenstruktur 218 weist diese vorne eine Sitzkissen-Quertraverse 239 auf, welche die beiden Seitenteile der Sitzkissenstruktur 218 fest miteinander verbindet. Das Polster 220 liegt flächig vorne und seitlich auf der Sitzkissenstruktur 218 auf, während es in seiner Mitte auf einer speziellen Sitzkissenabstützung 241 flächig aufliegt. Die Sitzkissenabstützung 241 ist zwischen der Sitzkissen-Quertraverse 239 und dem hinteren Ende des Mittelbaus 205, vorliegend einer Mittelbau-Quertraverse 242 des Mittelbaus 205, vorgesehen.

Die Sitzkissenabstützung 241 weist wenigstens einen, vorliegend drei zueinander parallele Längsträger 243 auf, welche an ihrem vorderen Ende mittels einfacher Drehgelenke an der Sitzkissen-Quertraverse 239 angelenkt und an ihrem hinteren Ende an einem Querträger 245 angebracht sind. Der Querträger 245 ist mit seinen beiden zapfenförmig ausgebildeten Enden jeweils in einem Schlitz einer Kulissenführung, im folgenden als Führung 247 bezeichnet, geführt. Dadurch ist jeweils ein Drehschubgelenk 248 definiert. Die beiden zueinander parallelen Führungen 247 sind fest mit dem Mittelbau 205 verbunden, und zwar vorliegend an der Mittelbau-Quertraverse 242 befestigt sind, welche zwei Seitenteile des Mittelbaus 205 an deren hinterem Ende fest miteinander verbindet. Alternativ könnten die Führungen 247 beispielsweise einstückig mit den Seitenteilen des Mittelbaus 205 ausgebildet oder mit dem Unterbau 203 verbunden sein.

Für die Auflage des Polsters 220 auf der Sitzkissenabstützung 241 bestehen mehrere Möglichkeiten alternativ zueinander oder in Kombination miteinander. Vorliegend ist für ein Drittel der Breite an zwei Längsträgern 243 mittels nach oben abstehender Adaptern 251 eine Sitzschale 253 angebracht, welche geringfügig nachgiebig ist. Für zwei Drittel der Breite ist eine Federmatte 255 zwischen der Sitzkissen-Quertraverse 239 und dem Querträger 245 angebracht, welche eine größere Nachgiebigkeit aufweist.

Zur Vergrößerung des Ladevolumens kann der Fahrzeugsitz 201 in eine flache Bodenstellung überführt werden. Hierzu wird ausgehend von einer Gebrauchsstellung, vorzugsweise der Designstellung, die Lehne 223 mittels des Beschlags 221 nach vorne in eine horizontale Tischstellung geklappt, wobei mittels einer erzwungenen Bewegung des zweiten Viergelenks 227, bei welcher die dritte Schwinge 217 nach vorne klappt, das Sitzkissen 219 relativ zum Mittelbau 205 nach vorne unten abgesenkt wird. Dabei wird die Sitzkissenabstützung 241 von der Sitzkissen-Quertraverse 239 nach vorne gezogen, worauf der Querträger 245 in den Führungen 247 ebenfalls nach vorne folgt. Durch einen geeignet gewählten Verlauf der Schlitze in den Führungen 247 kann sich die Sitzkissenabstützung 241 relativ zum Sitzkissen 219 bewegen. Insbesondere kann die Sitzkissenabstützung 241 stärker abgesenkt werden, damit die Lehne 223 sich besser, d.h. mit geringerer Polsterpressung, auf das Sitzkissen 219 legen kann. Die Relativdehnung zwischen dem stärker von den Seitenteilen der Sitzkissenstruktur 218 abgestützten Randbereich des Polsters 220 und dem von der Sitzkissenabstützung 241 abgestützten Mittelbereich des Polsters 220 wird jedoch durch das Polster 220 selber kompensiert.

Ferner kann der Fahrzeugsitz 201 zur besseren Zugänglichkeit der hinteren Sitzreihe in eine Einstiegsstellung gebracht werden. Hierzu wird ausgehend von einer Gebrauchsstellung, vorzugsweise der Designstellung, der Fahrzeugsitz 201 erst in die vorderste Sitzlängsposition gebracht und dann das Schloß 215 geöffnet, so dass das Schloß 215 sich vom Bolzen 213 lösen kann, und damit das erste Viergelenk 211 entriegelt ist. Durch Absenken der ersten Schwinge 207 nach unten und Vorschwen - ken der zweiten Schwinge 209 wird der gesamte Fahrzeugsitz 201 freigeschwenkt, insbesondere der die Lehne 223 mitnehmende Mittelbau 205 schräg nach vorne geklappt, wobei die Vorderkante des Mittelbaus 205 nach vorne und unten schwenkt. Ein gesondertes Freischwenken der Lehne 223 entfällt. Vielmehr behält diese ihre Position relativ zum Mittelbau 205 bei.

Optional ist für eine Längseinstellung des Fahrzeugsitzes 201 der Unterbau 203 oder der Mittelbau 205 seitlich mit Sitzschienenpaaren versehen, welche relativ zueinander in Längsrichtung verschiebbar und verriegelbar sind. Durch Entriegeln und Verschieben der Sitzschienen relativ zueinander ist die Sitzlängsposition des Fahrzeugsitzes 201 einstellbar, d.h. ausgehend von einer Gebrauchsstellung, beispielsweise der Designstellung, wird der Mittelbau 205, gegebenfalls auch ein Teil des Unterbaus 203, samt Sitzkissen 219 und Lehne 223 in Längsrichtung verschoben, wobei in der neuen Gebrauchsstellung die Sitzschienen wieder verriegelt werden.

### Bezugszeichenliste

- 201: Fahrzeugsitz
- 203: Unterbau
- 205: Mittelbau
- 207: erste Schwinge
- 209: zweite Schwinge
- 211: erstes Viergelenk
- 213: Bolzen
- 215: Schloß
- 217: dritte Schwinge
- 218: Sitzkissenstruktur
- 219: Sitzkissen
- 220: Polster
- 221: Beschlag
- 223: Lehne
- 225: Arm
- 227: zweites Viergelenk
- 239: Sitzkissen-Quertraverse
- 241: Sitzkissenabstützung
- 242: Mittelbau-Quertraverse
- 243: Längsträger
- 245: Querträger
- 247: Führung
- 248: Drehschubgelenk
- 251: Adapter
- 253: Sitzschale
- 255: Federmatte

## Patentansprüche

1. Fahrzeugsitz, insbesondere Kraftfahrzeugsitz, mit
a) einem Mittelbau (205),
b) einem vom Mittelbau (205) getragenen Sitzkissen (219), wobei das Sitzkissen (219) eine Sitzkissenstruktur (218) und ein Polster (220) aufweist, welches teilweise auf der Sitzkissenstruktur (218) und teilweise auf einer Sitzkissenabstützung (241) aufliegt, welche gelenkig mit der Sitzkissenstruktur (218) verbunden ist,
c) und einer Lehne (223), welche relativ zum Mittelbau (205) und/oder zum Sitzkissen (219) schwenkbar ist, wobei der Fahrzeugsitz (201) von einer einsitzbaren Gebrauchsstellung durch Vorschwenken der Lehne (223) und Absenken des Sitzkissens (219) in eine flache Bodenstellung überführbar ist,
**dadurch gekennzeichnet, dass**
d) die Sitzkissenabstützung (241) wenigstens einen Längsträger (243) aufweist, welcher vorne an der Sitzkissenstruktur (218) angelenkt ist und hinten mittels wenigstens eines Drehschubgelenkes (248) gelenkig mit dem Mittelbau (205) verbunden ist, wobei die Sitzkissenabstützung (241) zur Überführung des Fahrzeugsitzes (201) in die Bodenstellung relativ zur Sitzkissenstruktur (218) beweglich ist.

2. Fahrzeugsitz nach Anspruch 1, **dadurch gekennzeichnet, dass** das Polster (220) vorne und seitlich auf der Sitzkissenstruktur (218) aufliegt, während es in seiner Mitte auf der Sitzkissenabstützung (241) aufliegt.

3. Fahrzeugsitz nach Anspruch 1 oder 2, **dadurch gekennzeichnet, dass** wenigstens zwei Längsträger (243) vorgesehen sind, welche mittels eines gemeinsamen Querträgers (245) miteinander verbunden sind, wobei insbesondere die Drehschubgelenke (248) dem Querträger (245) zugeordnet sind.

4. Fahrzeugsitz nach Anspruch 3, **dadurch gekennzeichnet, dass** zur Bildung der Drehschubgelenke (248) der Querträger (245) an seinen Enden in Führungen (247) des Mittelbaus (205) geführt ist.

5. Fahrzeugsitz nach Anspruch 3 oder 4, **dadurch gekennzeichnet, dass** zwischen den Längsträgern (243) und/oder dem Querträger (245) und einer Sitzkissen-Quertraverse (239) der Sitzkissenstruktur (218) eine Sitzschale (253) und/oder eine Federmatte (255) zur Aufnahme des Polsters (220) vorgesehen ist.

6. Fahrzeugsitz nach einem der vorhergehenden Ansprüche, **dadurch gekennzeichnet, dass** zur Überführung des Fahrzeugsitzes (201) in die Bodenstellung das Sitzkissen (219) mittels eines Viergelenks (227) relativ zum Mittelbau (205) absenkbar ist.

7. Fahrzeugsitz nach einem der vorhergehenden Ansprüche, **dadurch gekennzeichnet, dass** der Mittelbau (205) mittels eines weiteren Viergelenks (211) an einem Unterbau (203) angelenkt ist und dass der Fahrzeugsitz (201) von der Gebrauchsstellung in eine Einstiegsstellung überführbar ist, indem das weitere Viergelenk (211) den Fahrzeugsitz (201) als Ganzes freischwenkt, während die Lehne (223) ihre Position relativ zum Mittelbau (205) beibehält.

## Claims

1. A vehicle seat, in particular a motor vehicle seat, with
a) a central structure (205),
b) a seat cushion (219) which is carried by the central structure (205) wherein the seat cushion (219) has a seat cushion structure (218) and padding (220) which at least partially rests on the seat cushion structure (218), and partially on a seat cushion support (241), which is movable relative to the seat cushion structure (218),
c) and a backrest (223) which can be pivoted relative to the central structure (205) and/or to the seat cushion (219), the vehicle seat (201) being transferable from a use position, in which it can be sat in, into a flat lowered position by pivoting of the backrest (223) and lowering of the seat cushion (219),
**characterized in that**
d) the seat cushion support (241) has at least one longitudinal member (243) which is coupled at the front to the seat cushion structure (218) and is connected in an articulated manner at the rear to the central structure (205) by means of at least one turning and sliding joint, wherein the seat cushion support (241) is movable relative to the seat cushion structure (218) in order to transfer the vehicle seat (201) into the lowered position.

2. The vehicle seat as claimed in claim 1, **characterized in that** the padding (220) rests at its front and on its sides on the seat cushion structure (21), while, in its center, it rests on the seat cushion support (241).

3. The vehicle seat as claimed in claim 1 or 2, **characterized in that** at least two longitudinal members (243) are provided, which are connected to each other by means of a common transverse member (245), wherein, in particular, the turning and sliding joints (248) are assigned to the transverse member (245).

4. The vehicle seat as claimed in claim 3, **characterized in that**, in order to form the turning and sliding joints (248), the transverse member (245) is guided at its ends in guides (247) of the central structure (205)

5. The vehicle seat as claimed in claim 3 or 4, **characterized in that**, to hold the padding (220), a seat shell (253) and/or a spring mat (255) is provided between the longitudinal members (243) and/or the transverse member (245) and a seat cushion crossbar (239) of the seat cushion structure (218)

6. The vehicle seat as claimed in one of the preceding claims, **characterized in that**, in order to transfer the vehicle seat (201) into the lowered position, the seat cushion (219) can be lowered relative to the central structure (205) by means of a four-bar linkage (227).

7. The vehicle seat as claimed in one of the preceding claims, **characterized in that** the central structure (205) is coupled to a substructure (203) by means of a further four-bar linkage (211), and **in that** the vehicle seat (201) can be transferred from the use position into an entry position by the further four-bar linkage (211) freely pivoting the vehicle seat (201) as a whole while the backrest (223) retains its position relative to the central structure (205).

## Revendications

1. Siège de véhicule, en particulier siège de véhicule automobile, avec
a) une structure centrale (205) ;
b) un coussin d'assise (219) porté par la structure centrale (205), le coussin d'assise (219) comprenant une structure de coussin d'assise (218) et un rembourrage (220) qui repose pour partie sur la structure de coussin d'assise (218) et pour partie sur un support de coussin d'assise (241) qui est relié de manière articulée à la structure de coussin d'assise (218) ; et
c) un dossier (223) qui est basculable par rapport à la structure centrale (205) et/ou au coussin d'assise (219), le siège de véhicule (201) est commutable entre une position d'usage permettant de s'asseoir et une position aplatie au sol par un basculement vers l'avant du dossier (223) et un abaissement du coussin d'assise (219) ;
**caractérisé par le fait que** :
d) le support de coussin d'assise (241) comprend au moins un longeron (243) qui est articulé à l'avant sur la structure de coussin d'assise (218) et qui est relié à l'arrière de manière articulée avec la structure centrale (205) grâce à au moins une articulation pivotante et coulissante (248), le support de coussin d'assise (241) étant apte à se déplacer par rapport à la structure de coussin d'assise (218) pour permettre de placer le siège de véhicule (201) dans la position au sol.

2. Siège de véhicule selon la revendication 1, **caractérisé par le fait que** le rembourrage (220) repose sur l'avant et latéralement sur la structure de coussin d'assise (218), tandis qu'il repose dans sa partie centrale sur le support de coussin d'assise (241).

3. Siège de véhicule selon l'une des revendications 1 ou 2, **caractérisé par le fait qu'**il est prévu au moins deux longerons (243) qui sont reliés ensemble par une traverse commune (245), les articulations pivotantes et coulissantes (248) étant en particulier associées à la traverse (245).

4. Siège de véhicule selon la revendication 3, **caractérisé par le fait qu'**afin de former les articulations pivotantes et coulissantes (248), la traverse (245) est guidée par ses extrémités dans des glissières (247) de la structure centrale (205).

5. Siège de véhicule selon l'une des revendications 3 et 4, **caractérisé par le fait qu'**il est prévu entre les longerons (243) et/ou la traverse (245) et une traverse de coussin d'assise (239) de la structure de coussin d'assise (218) une coque d'assise (253) et/ou une nappe de ressorts (255) recevant le rembourrage (220).

6. Siège de véhicule selon l'une des revendications précédentes, **caractérisé par le fait qu'**afin de passer le siège de véhicule (201) dans la position au sol, le coussin d'assise (219) est abaissable par rapport à la structure centrale (205) grâce à une articulation quadruple (227).

7. Siège de véhicule selon l'une des revendications précédentes, **caractérisé par le fait que** la structure centrale (205) est articulée sur une structure porteuse (203) grâce à une autre articulation quadruple (211) et que le siège de véhicule (201) est apte à passer d'une position d'usage à une position de montée lorsque l'autre articulation quadruple (211) fait basculer le siège de véhicule (201) dans son ensemble alors que le dossier (223) conserve sa position par rapport à la structure centrale (205).
